# EUROPEAN PATENT APPLICATION

(11) **EP 2 708 784 A1**
(43) Date of publication of application: **19.03.2014**
(21) Application number: 13184102.5
(22) Date of filing: 12.09.2013
(51) Int. Cl.: F16K 15/02

(54) **Air flow restrictor in a smoke extractor pneumatic installation**

(30) Priority: 12.09.2012 PL 40074712
(71) Applicant: Rothgangl, Erhard, 61130 Saint Germain de la Coudre (FR)
(72) Inventor: Rothgangl, Erhard, 61130 Saint Germain de la Coudre (FR)
(74) Representative: Kacperski, Andrzej

(57) **Abstract**

Air flow restrictor in a smoke extractor pneumatic installation characterised in that the axially symmetric piston (5) having the valve head (51) separating the first chamber (11) and the second chamber (12), is mounted moveably and elastically on the axially symmetric mandrel (2) fixed in the second chamber (12), in addition the by-pass channel (54) is situated in the piston axis (5). The by-pass channel (54) in the piston (5) is an orifice with a step-changed diameter size with at least two steps, in addition the smallest of the diameters forms a throat (55) determining the size of the air stream in the restricted direction (P2).

## Description

This invention concerns a one-way air flow restrictor, with an unrestricted flow in the reverse direction, applied in a smoke extractor pneumatic installation, in particular for opening of a smoke window and a roof smoke flap.

A one-way air flow restrictor in closed pneumatic lines is known from description DE 3215696 A1, based on automatic opening of the main channel during a flow in one direction and closing it during a flow in the reverse direction. The restrictor has an additional channel for a flow with the closed main channel, whose cross-section may be adjusted with a variable cross-section ring mounted in a rotary bush. This solutions enables the air flow rate to be adjusted manually by the restrictor in the direction opposite to the open direction. However, this solution is relatively complex and contains sealing members subjected to abrasion during operation, which may lead to leakage in the system.

Also a valve restricting liquid flow in one direction and allowing unrestricted flow in the opposite direction is known from description AU 71 098/81, this valve solves a problem related to operation of a water pump feeding the pressure tank, in order to restrict the wear of the pump parts. The valve has a movable head, maintained in its home position by a spring, a small cross-section channel is made in the head to allow a restricted flow of water when the valve is closed. The water flowing in the open direction causes pressure-driven opening of the valve head. Stopping of the flow makes the valve head close and the restricted flow goes in the reverse direction only through the additional channel in the head. When the water continuously flows out of the tank, the tank is filled up slowly and the pump is shut off only after the final pressure in the tank has been achieved, without rapid pump on and off cycles.

The object of the invention is to introduce a one-way air flow restrictor, featuring a limited flow in the restricted direction and an unlimited flow in the unrestricted direction, enabling the problem of smooth and slow opening of a smoke window or a smoke flap in smoke extractors in the circumstances of a fire occurrence to be solved.

The essence of the solution according to the invention consists in that an axially symmetric piston, having a valve head separating the first inlet chamber in the unrestricted direction and the second inlet chamber in the restricted direction, is mounted in a slidable and elastic manner on an axially symmetric mandrel fixed in the second chamber.

The piston has a through by-pass channel, going through the valve head, allowing a restricted air flow between the chambers separated by the valve head, in addition the by-pass channel is situated in the piston axis. The by-pass channel is an orifice with a step-changed diameter size with at least two steps, in addition the smallest of the diameters forms a throat determining the volume of the air stream in the restricted direction. The orifice size is adjusted to the required air stream, which can be e.g. a function of the speed of the piston movement in pneumatic cylinders.

The piston is a cylindrical member closing the air flow between the first chamber and the cylindrical second chamber by the valve head pressure against the valve seat with an axial spring, seated on the mandrel. The spring is seated in the piston in a cylindrical spring seat situated in an assembly opposite the mandrel. The internal diameter of the spring seat exceeds the external diameter of the mandrel by a value enabling the axial spring to be freely seated in them.

The piston moves inside the cylindrical second chamber, thus the piston external diameter is smaller than the diameter of the second chamber. The diameter difference should be as big as to allow a free unrestricted air flow in this part of the restrictor, as it constitutes a part of the main flow channel in the unrestricted direction.

The piston has a transverse channel, preferably perpendicular to the piston axis and preferably fully through going, connecting the second chamber room to the spring seat. The mandrel, on which the spring is seated, has an internal channel parallel to the piston axis forming in the assembly a header for the air stream from the by-pass channel and the main flow channel formed by the orifice of the valve seat, a cylindrical space between the second chamber and the piston, and a transverse channel. The mandrel height is lower than the depth of the spring seat, therefore the assembly of the described components forms the main flow channel in the unrestricted direction.

The opening of the restrictor for a flow in the unrestricted direction is forced by the air pressure in the first chamber. The action of pressure causes that a force occurs, whose axial component moves the piston along with the valve head away from the valve seat enabling the air to flow. The opening size is a function of the axial force difference caused simultaneously by the spring and the air pressure impacting the head.

At the open restrictor the air flows in the unrestricted direction through a gap between the valve head and the valve seat, then through the space between the second chamber and the piston, the air flows into the transverse channel and the internal channel in the mandrel. The internal channel in the mandrel performs the function of a header for the air stream from the by-pass channel and the main channel. The internal channel in the mandrel is the last component of the air way through the flow restrictor in the unrestricted direction.

A limited flow in the restricted direction is only possible through the by-pass channel. In this case the pressure in the first chamber is lower than in the second one, so the resultant axial force impacting the piston causes the valve seat to be closed by the valve head, preventing the air from flowing through the main flow channel. The air flows from the second chamber into the first one through the internal channel in the mandrel and the by-pass channel in the piston.

The solution according to the invention enables the feeding system of a smoke window or a smoke flap to respond smoothly, maintaining the normal operation of the system.

The solution according to the invention is presented in the embodiment example shown in the pictures, where individual figures present:

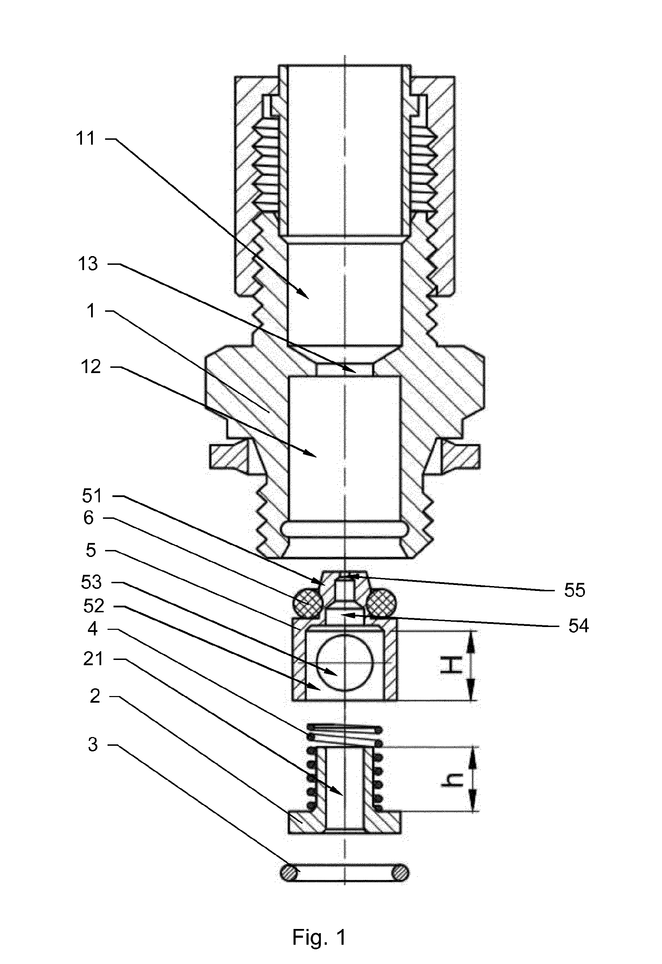

Fig. 1 - the restrictor in an exploded view,

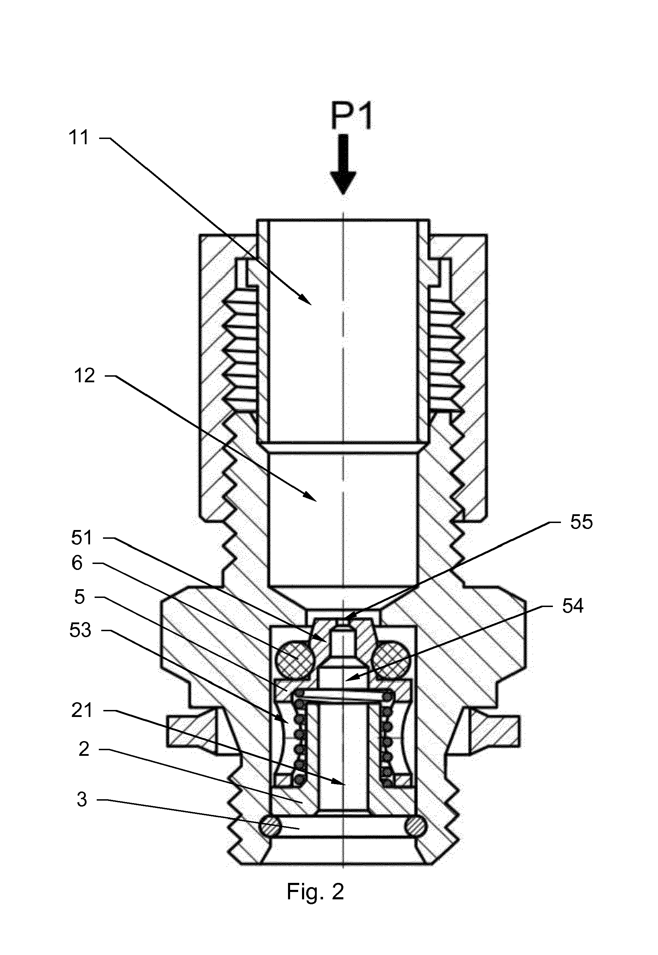

Fig. 2 - the restrictor in the position unrestricting the flow,

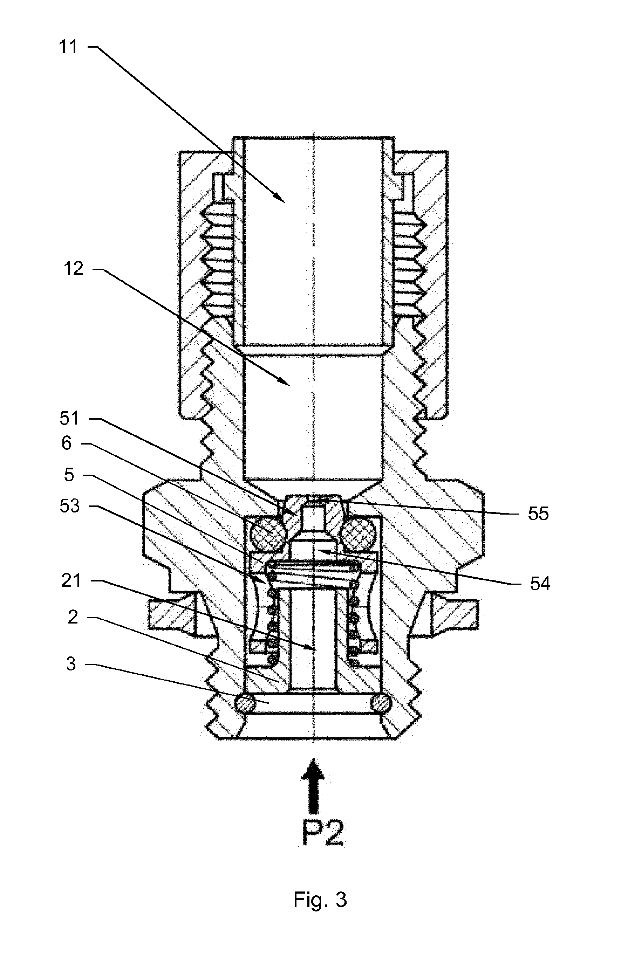

Fig. 3 - the restrictor in the position restricting the flow in the reverse direction.

A one-way air flow restrictor according to the invention comprises a basically axially symmetric body 1 that comprises the following working components:
- cylindrical first chamber 11, situated at the inlet of the unrestricted flow direction P1,
- a cylindrical second chamber 12, situated at the inlet of the restricted flow direction P2,
- a valve seat 13.

In the second chamber 12 a mandrel 2 is fixed, protected against slipping out by a locating ring 3. The mandrel 2, on which a spring 4 is mounted, has an internal channel 21. A piston 5 is moveably mounted on the mandrel 2 with the spring 4. The piston 5 is the member that closes the air flow between the first chamber 11 and the second chamber 12 with a valve head 51, with an additional sealing in the form of a seal 6, pressed to the valve seat 13 with the spring 4 mounted on the mandrel 2.

The spring 4 is mounted in the spring seat 52 bored in the piston 5, which in the assembly is situated opposite the mandrel 2. The internal diameter of the spring seat 52 exceeds the external diameter of the mandrel 2 by a value enabling the axially symmetric spring 4 to be freely seated in them.

The piston 5 is loosely mounted inside the cylindrical second chamber 12, in addition the external diameter of the piston 5 is smaller than the diameter of the second chamber 12. The difference of the mentioned diameters is selected for a specific solution, in addition preferably the cross-section through which the air flows should allow a free flow without significant pressure losses. The piston 5 has a through transverse channel 53, connecting the space of the second chamber 12 to the spring seat 52.

The piston 5 has a through by-pass channel 54 situated in the piston axis and going through the valve head 51. The by-pass channel 54 allows a restricted air flow between the first chamber 11 and the internal channel 21 in the mandrel 2. The mandrel height h is lower than the depth of the spring seat "H", the assembly of the described components forms the main flow channel in the unrestricted direction P1.

The by-pass channel 54 is an orifice with three step-changed diameters, in addition the smallest of the diameters forms a throat 55, and its diameter is adjusted to the required air stream volume in the restricted direction P2. However, the biggest diameter is preferably equal to the diameter of the internal channel 21.

When the restrictor is open the air flows in the unrestricted direction P1 through the gap between the valve head 51 and the valve seat 13, next through the space between the second chamber 12 and the piston 5 the air flows into the transverse channel 21 in the mandrel 2 and flows out to the adjacent components of the system.

A limited flow in the restricted direction P2 is only possible through the by-pass channel 54, because the pressure in the first chamber 11 is lower than in the second chamber 12, so the resultant axial force impacting the piston causes the valve seat 13 to be closed by the valve head 51, thus preventing the air flow this way. The air flows in the restricted direction P2 from the second chamber 12 to the first chamber 11 through the internal channel 21 in the mandrel 2 and the by-pass channel 54 in the piston 5.

## Claims

1. Air flow restrictor in a smoke extractor pneumatic installation, featuring a limited flow in the restricted direction and an unlimited flow in the unrestricted direction, having a valve seat shaped in its body and a movable piston with a valve head, maintained in the closed position by a spring, in addition a through by-pass channel is located in the valve head, allowing a limited air flow, **characterised in that** the axially symmetric piston (5) having the valve head (51) separating the first chamber (11) and the second chamber (12), is mounted moveably and elastically on the axially symmetric mandrel (2) fixed in the second chamber (12), in addition the by-pass channel (54) is situated in the piston axis (5).

2. Flow restrictor as claimed in claim 1, **characterised in that** the by-pass channel (54) in the piston (5) is an orifice with a step-changed diameter size with at least two steps, in addition the smallest of the diameters forms a throat (55) determining the size of the air stream in the restricted direction (P2).

3. Flow restrictor as claimed in claim 1, **characterised in that** the piston (5) is a cylindrical member closing the air flow between the first chamber (11) and the cylindrical second chamber (12) by the valve head (51) pressure against the valve seat (13) with an axial spring (4) mounted on the mandrel (2).

4. Flow restrictor as claimed in claim 3, **characterised in that** the piston (5) has a cylindrical spring seat (52) situated in the assembly opposite the mandrel (2), in addition the internal diameter of the spring seat (52) exceeds the external diameter of the mandrel (2) by a value enabling the axially symmetric spring (4) to be freely seated in them.

5. Flow restrictor as claimed in claim 3, **characterised in that** the piston external diameter (5) is smaller than the second chamber diameter (12) and the piston (5) has a transverse channel (53) connecting the space of the second chamber (12) to the valve seat (13).

6. Flow restrictor as claimed in claim 3 **characterised in that** the height (h) of the mandrel (2) is smaller than the depth (H) of the spring seat (52).

7. Flow restrictor as claimed in claim 3, **characterised in that** the mandrel (2) has an internal channel (21) parallel to the piston (5) axis, forming in the assembly a header for the air stream from the by-pass channel (54), and the main flow channel formed by the gap between the valve seat (13) and the valve head (51), the space between the second chamber (12) and the piston (5), and the transverse channel (53).
